Europäisches Patentamt

European Patent Office

Office européen des brevets

(11) Veröffentlichungsnummer: **0 012 894**
**A1**

## (12) EUROPÄISCHE PATENTANMELDUNG

(21) Anmeldenummer: **79104969.5**

(22) Anmeldetag: **06.12.79**

(51) Int. Cl.³: **B 08 B 15/00**
**F 01 N 7/08**

(30) Priorität: **21.12.78 DE 2855325**

(43) Veröffentlichungstag der Anmeldung:
**09.07.80 Patentblatt 80/14**

(84) Benannte Vertragsstaaten:
**AT BE CH DE FR GB IT LU NL SE**

(71) Anmelder: **NORFI Nordfilter-Anlagenbau GmbH**
**Poststrasse 6**
**D-2401 Ratekau(DE)**

(72) Erfinder: **Regese, Bruno**
**Am Vogelsberg 2 Kreuzkamp**
**D-2401 Ratekau(DE)**    ;

(74) Vertreter: **von Raffay, Vincenz, Dipl.-Ing. et al,**
**Patentanwälte Dipl.-Ing. Vincenz v. Raffay Dipl.-Chem.**
**Dr. Hans D. Boeters Postfach 32 32 17**
**D-2000 Hamburg 13(DE)**

(54) **Absauganlage, insbesondere für die Kraftfahrzeugindustrie.**

(57) Die Absauganlage, insebesondere für die Kraftfahrzeugindustrie, besteht aus einem in Längsrichtung geschlitzten, stranggepressten Absaugkanal, in dem ein Düsenwagen hin- und herbewegbar ist. Der Durchtrittsschlitz für die Düse (12) ist durch Dichtlippen (10) abgedichtet. Der Absaugkanal besteht aus einzelnen Profilen (1,2,3), die formschlüssig miteinander verbunden sind, wobei die formschlüssige Verbindung (5) durch Flansche gebildet ist, die der Versteifung und der Führung der Räder des Düsenwagens dienen.

EP 0 012 894 A1

./...

BEZEICHNUNG 0012894
siehe Titelseite

Die Erfindung betrifft eine Absauganlage, insbesondere
für die Kraftfahrzeugindustrie,mit einem an seiner
Unterseite in Längsrichtung geschlitzten Absaugkanal
aus stranggepresster Aluminiumlegierung, an dem die Räder eines Düsenwagens geführt sind, dessen Düse durch
den mit Dichtlippen versehenen Schlitz in den Absaugkanal
hineinragt.

Bei einer bekannten Absauganlage der vorstehend genannten
Art besteht der Absaugkanal aus einem Stück. Im Querschnitt ist er oval oder kreisförmig. Lediglich im unteren
Bereich weist der Absaugkanal einen Schlitz mit Dichtlippen auf. Die Räder für den Düsenwagen laufen im wesentlichen unmittelbar auf dem Absaugkanal. Der Querschnitt
ist durch das stranggepresste Profil ein für allemal festgelegt (DT-PS 19 24 266).

Der Erfindung liegt die Aufgabe zugrunde, einen Absaugkanal der eingangs genannten Art zu schaffen, der preiswerter und leichter hergestellt werden kann und insbesondere einen universelleren Einsatz dadurch ermöglicht,
daß er in verschiedenen Querschnitten, d.h. für verschiedene Absaugleistungen herstellbar ist.

Diese Aufgabe wird grundsätzlich dadurch gelöst, daß der
Absaugkanal aus einzelnen Profilen besteht, die formschlüssig miteinander verbunden sind,
im Bereich der formschlüssigen Verbindung Flansche ausgebildet sind,
die Versteifungsprofile tragen, die gleichzeitig Schienen
für die Räder des Düsenwagens sind.

In vorteilhafter Weise kann der Absaugkanal der Absauganlage aus drei oder mehreren Profilen zusammengesetzt sein,
je nachdem, wie groß der erwünschte Querschnitt ist. Besonders zweckmäßige Ausgestaltungen sind Gegenstand
der Ansprüche 2 und 3.

Der erfindungsgemäße Absaugkanal besteht aus mehreren
formschlüssig miteinander verbundenen Profilen, die
einfach nach dem Strangpreßverfahren aus einer Aluminiumlegierung hergestellt werden können. Bei diesem Strangpressen werden die formschlüssigen Verbindungen und die
Flansche mit hergestellt. Die der Verbindung dienenden
Flansche tragen zusätzlich Versteifungsprofile, die es
ermöglichen, daß die anderen Abschnitte des Profiles sehr
leicht und dünn ausgebildet werden können, ohne daß Einbußen an Festigkeit und Steifigkeit zu befürchten sind.
Diese Versteifungsprofile bilden gleichzeitig die Schienen
für die Räder des Düsenwagens.

In vorteilhafter Weise können Klammern zur Verbindung der
Flansche vorgesehen sein.

Weiterhin ist es erfindungsgemäß möglich, die einzelnen
Profile in Längsrichtung gegeneinander zu versetzen oder
zu verschieben, so daß nicht sämtliche Stoßstellen in
einem Querschnitt liegen. Hierdurch wird sicher eine Verschiebung in der Ebene senkrecht zur Längsrichtung verhindert.

Weitere Vorteile und Einzelheiten der Erfindung werden unter Hinweis auf die Zeichnung anhand eines Ausführungsbeispieles näher erläutert.

In der einzigen Figur ist eine Absauganlage mit Absaugkanal aus insgesamt fünf Profilen veranschaulicht.

Das obere Profil 1 weist den Querschnitt eines umgedrehten
U's auf. Der mittlere Abschnitt wird durch zwei gleiche Profile 2 gebildet, die lediglich klappsymmetrisch zueinander angeordnet sind. Der untere Abschnitt wird durch
zwei gleiche Profile 3 gebildet, die ebenfalls klappsymmetrisch angeordnet sind und die Dichtlippen 1o in
Nuten 9 tragen. Die Dichtlippen 1o dichten den unteren
in Längsrichtung verlaufenden Schlitz ab.

Beim Betrachten der Figur aus fünf Profilen 1 bis 3
wird deutlich, daß die mittleren Profile 2 weggelassen
werden können. Dann entsteht ein entsprechender Kanal aus
drei Profilen 1, 3 mit kleinerem Querschnitt. Grundsätzlich
ist es auch möglich, zur Vergrößerung des Querschnittes
weitere mittlere Profile 2 hinzuzufügen.

An dem oberen Profil 1 sind zwei Nuten 4 zum Aufhängen
vorgesehen.

Die Verbindung der einzelnen Profile 1 bis 3 erfolgt über
formschlüssige Verbindungen 5, die bei der dargestellten
Ausführungsform hakenförmig ausgebildet sind. Im Bereich
der formschlüssigen Verbindung 5 sind Flansche vorgesehen, die einen Spalt 7 für eine Dichtung begrenzen. Die
Flansche sind durch Klammern 6 miteinander verbunden.

Weiterhin tragen die Flansche Versteifungsprofile 8, die
gleichzeitig Schienen für den Düsenwagen bilden. Der
Düsenwagen ist an einem Fahrwerk 11 aufgehängt. Die Düse
ist mit 12 bezeichnet.

Beim Betrachten der Zeichnung wird deutlich, daß der
Düsenwagen drehmomentenfest aufgehängt ist. Wenn eine
besondere Belastung zu erwarten ist, so kann das Fahrwerk
11 nach oben verlängert und das obere Räderpaar so angebracht werden, daß es auf dem oberen Versteifungsprofil 8
läuft. Dann ist das Moment mit dem der Wagen belastet werden kann noch größer.

In Längsrichtung können die einzelnen Profile 1 bis 5
gegeneinander versetzt oder verschoben sein, so daß die
Stoßstellen nicht alle in einer Ebene liegen. Hierdurch
wird sichergestellt, daß keine Verschiebung der Profile
gegeneinander quer zur Längsrichtung möglich ist. Es liegt
also immer ein glatter Absaugkanal vor, in dem keinerlei
Strömungshindernisse vorhanden sind, so daß sich auch
kein Schmutz ansammeln kann. In den Innenraum des Absaugkanals ragt lediglich die Düse 12 hinein.

**RAFFAY & BOETERS**
PATENTANWÄLTE
POSTFACH 32 32 17
D-2000 HAMBURG 13

4. Dezember 1979

DIPL.-ING. VINCENZ RAFFAY
HAMBURG

DIPL.-CHEM. DR. HANS D. BOETERS
MÜNCHEN

KANZLEI:
GEFFCKENSTRASSE 6
TELEFON: (040) 47 80 23
TELEGRAMME: PATFAY, HAMBURG

0012894

- 5 -

UNSERE AKTE: 2239/17

NORFI Nordfilter-Anlagenbau GmbH
Poststraße 6, 2401 Ratekau

:

Absauganlage, insbesondere für die
Kraftfahrzeugindustrie.

Patentansprüche

1. Absauganlage, insbesondere für die Kraftfahrzeugindustrie mit einem an seiner Unterseite in Längsrichtung geschlitzten Absaugkanal aus stranggepresster
Aluminiumlegierung, an dem die Räder eines Düsenwagens
geführt sind, dessen Düse durch den mit Dichtlippen
versehenen Schlitz in den Absaugkanal hineinragt, dadurch gekennzeichnet, daß
der Absaugkanal aus einzelnen Profilen (1,2 und 3)
besteht, die formschlüssig miteinander verbunden
(bei 5) sind,
im Bereich der formschlüssigen Verbindung (5)
Flansche ausgebildet sind, die
Versteifungsprofile (8) tragen, die gleichzeitig
Schienen für die Räder des Düsenwagens (11) sind.

2. Absauganlage nach Anspruch 1, dadurch gekennzeichnet, daß der Absaugkanal aus drei Profilen (1, 2, 3) besteht, von denen das obere (1) den Querschnitt eines umgekehrten U's aufweist, an dessen freien, nach unten gerichteten Enden die beiden unteren und gleichen aber klappsymmetrisch angeordneten Profile (3), die die Dichtlippen (1o) tragen, durch die formschlüssige Verbindung (5) befestigt sind.

3. Absauganlage nach Anspruch 1 und 2, dadurch gekennzeichnet, daß zwischen dem oberen Profil (1) und den unteren Profilen (3) Vergrößerungsprofile (2) befestigt sind, die ebenfalls gleich aber klappsymmetrisch angeordnet sind.

4. Absauganlage nach einem der vorstehenden Ansprüche, dadurch gekennzeichnet, daß auf die Flansche im Bereich der formschlüssigen Verbindungen (5) Klammern (6) aufgesetzt sind.

5. Absauganlage nach einem der vorstehenden Ansprüche, dadurch gekennzeichnet, daß die einzelnen formschlüssig miteinander verbundenen Profile (1,2 und 3) in Längsrichtung gegeneinander versetzt sind.

Beschreibung:

### Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 326 234 (GARDNER-DENVER)<br>* Spalte 1, Zeile 61 bis Spalte 4, Zeile 42; Abbildungen 1-4 *<br><br>-- | 1,2 |
| | DE - A - 2 246 043 (GRUHL)<br>* Seite 5, Zeile 15 bis Seite 8, Zeile 4; Abbildungen 1-4 *<br><br>-- | 1 |
| | FR - A - 2 075 442 (VAHLBRAUK)<br>* Seite 7, Zeile 40 bis Seite 8, Zeile 14; Abbildung 1 *<br><br>-- | 3 |
| | US - A - 3 273 598 (GOETTL)<br>* Spalte 4, Zeilen 50-65; Abbildungen 8,9 *<br><br>---- | 4,5 |

**KLASSIFIKATION DER ANMELDUNG (Int.Cl. ³)**

B 08 B 15/00
F 01 N 7/08

**RECHERCHIERTE SACHGEBIETE (Int. Cl. ³)**

B 08 B
F 16 L
F 01 N
F 24 F

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt

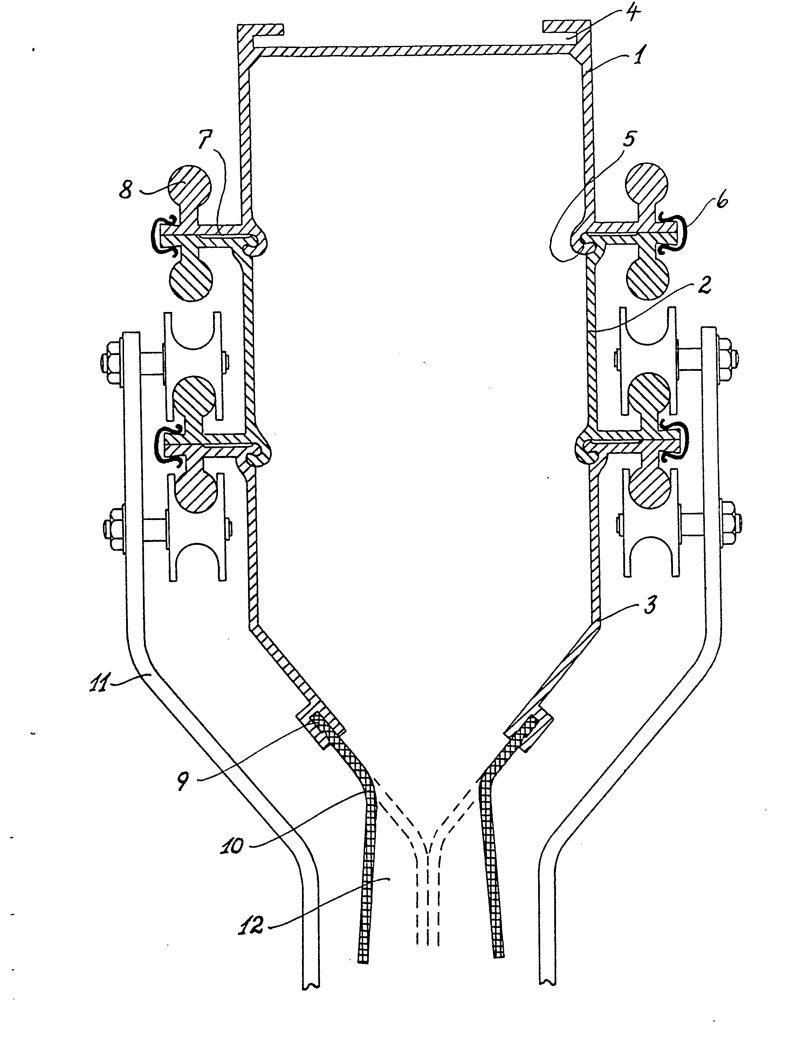

| Recherchenort | Abschlußdatum der Recherche | Prüfer |
|---|---|---|
| Den Haag | 13-03-1980 | CLAEYS |

EPA form 1503.1   06.78